# EUROPÄISCHE PATENTSCHRIFT

(11) **EP 2 523 059 B1**
(45) Veröffentlichungstag und Bekanntmachung des Hinweises auf die Patenterteilung: **06.12.2017**
(21) Anmeldenummer: 12003568.8
(22) Anmeldetag: 07.05.2012
(51) Int. Cl.: G05B 19/418, G05B 19/042

(54) **Verfahren und Einrichtung zur einheitlichen Benennung von gleichen Parametern unterschiedlicher Feldgeräte eines Automatisierungssystems**
Method and device for systematic naming of identical parameters of different field devices of an automation system
Procédé et dispositif de désignation uniforme de paramètres identiques de différents appareils de terrain d'un système d'automatisation

(30) Priorität: 11.05.2011 DE 102011101154
(43) Veröffentlichungstag der Anmeldung: 14.11.2012
(73) Patentinhaber: ABB Schweiz AG, 5400 Baden (CH)
(72) Erfinder: Grossmann, Daniel, Dr.-Ing., 85049 Ingolstadt (DE); Kaiser, Alexander, 68542 Heddesheim (DE); Danzer, Benjamin, Dr.-Ing., 80638 München (DE); John, Dirk, Dr.-Ing., 76199 Karlsruhe (DE); Schulz, Dirk, Dr., 67149 Meckenheim (DE); Braun, Roland, 53859 Niederkassel Lülsdorf (DE); Bollmeyer, Stefan, 32425 Minden (DE)
(74) Vertreter: Marks, Frank

(56) Entgegenhaltungen:
- DE-A1- 10 308 725
- DE-A1-102007 026 678
- US-A1- 2005 055 369

## Beschreibung

Die Erfindung betrifft ein Verfahren sowie eine Einrichtung zur Vereinheitlichung von ungleichen Bezeichnungen von physikalisch gleichen Parametern unterschiedlicher Feldgeräte derselben Art in einem Automatisierungssystem, die über ein industrielles Kommunikationsprotokoll, wie HART, Profibus, Profinet oder dergleichen, von mindestens einer zentralen Steuereinheit aus parametriert werden. Weiterhin betrifft die Erfindung auch ein dieses Verfahren umsetzendes Computerprogrammprodukt.

Das Einsatzgebiet der vorliegenden Erfindung erstreckt sich auf Automatisierungssysteme im Rahmen industrieller Anlagen, beispielsweise der Verfahrenstechnik. Zur Steuerung der Verfahrensabläufe werden Feldgeräte mit Ventilen als Stellglieder sowie Sensoren zur Erfassung physikalischer Größen und dergleichen eingesetzt, die mit einer übergeordneten Steuerung und untereinander über das industrielle Kommunikationsprotokoll kommunizieren. Solche Feldgeräte besitzen zur Busanbindung sowie zur lokalen Datenverarbeitung integrierte Elektronikeinheiten. Bei modernen Automatisierungssystemen, welche sich zur Kommunikation eines Kommunikationsprotokolls bedienen, werden höhere Stufen der Feldgeräteinformation integriert, um Arbeitsprozesse zu modernisieren, Prozess- und Produktqualität zu verbessern und die Verfügbarkeit zu maximieren.

Konfigurationsfunktionen, Parametrierungsfunktionen und Diagnosefunktionen des Steuerungssystems beziehen sich insoweit ebenfalls auf die Feldgeräte. Der Begriff Feldgerät wird im Rahmen der vorliegenden Erfindung für intelligente Sensoren, Akuatoren, Analysegeräte und Niederspannungsgeräte verwendet, welche sich über einen Busanschluss in ein Automatisierungssystem integrieren lassen. Durch die Verwendung intelligenter Feldgeräte und unter Nutzung von modernen Kommunikationsprotokollen lassen sich eine Vielzahl von Funktionen im Automatisierungssystem implementieren, wie Bedienfunktionen, Inbetriebnahmefunktionen, Diagnosefunktionen, Wartungsfunktionen, Optimierungsfunktionen, Alarmverarbeitungsfunktionen und dergleichen.

Hieraus resultiert der Trend, dass Feldgeräte immer komplexer und intelligenter im Aufbau bzw. Funktionsumfang werden. Dies kommt zum Ausdruck durch eine hohe Anzahl von Parametern der Feldgeräte. Diese Parameter treten in einer großen Vielfalt auf und sind hinsichtlich ihrer Bezeichnung herstellerabhängig unterschiedlich, obwohl ungleiche Bezeichnungen physikalisch gleichen Parametern von Feldgeräten unterschiedlicher Hersteller zuzuordnen sind.

Aus dieser Situation ergibt sich für den Nutzer vermehrt die Problemstellung, dass die Menge und uneinheitliche Bezeichnung solcher Parameter mit der Größe und Komplexität des Automatisierungssystems ansteigt und unübersichtlich wird. Daher ist eine Integration von Feldgeräten in ein Automatisierungssystem recht zeitaufwendig. Insbesondere sind die Bedeutungen von Bezeichnungen der Parameter über entsprechende Dokumentationen des Herstellers zu ergründen, ehe eine Einbindung in das Automatisierungssystem stattfinden kann.

Aus der DE 10 2007 026 678 A1 geht der prinzipielle Aufbau eines Automatisierungssystems hervor. Mehrere Feldgeräte sind über einen digitalen Feldbus, hier PROFIBUS, mit einer elektronischen Steuereinheit verbunden. Zum Austausch eines zu ersetzenden Feldgeräts gegen ein neues Feldgerät werden bisherige Parameter, Informationen und/oder Werte des zu ersetzenden Feldgeräts durch eine über den Feldbus kommunizierende elektronische Steuereinheit mit Parametern Informationen oder Werten des neuen Feldgeräts bezüglich mindestens eines Datensatzes verglichen, um diese erforderlichenfalls gemäß des zu ersetzenden Feldgeräts zu ändern.

Stammt das neue Feldgerät von einem anderen Hersteller als das zu ersetzende Feldgerät, so tritt die vorgenannte Problematik einer meinst uneinheitlichen Bezeichnung der eigentlich physikalisch gleichen Parameter auf, welche zeitaufwendig vom Nutzer zu interpretieren sind, um die Systemintegration zu vollziehen.

Es ist daher die Aufgabe der vorliegenden Erfindung ein Verfahren sowie eine Einrichtung zu schaffen, mit welcher eine sichere und zeitsparende Integration eines Feldgeräts trotz uneinheitlicher Bezeichnung der Parameter vorgenommen werden kann.

Die Aufgabe wird ausgehend von einem Verfahren gemäß dem Oberbegriff an Anspruch 1 in Verbindung mit dessen kennzeichnenden Merkmalen gelöst. Hinsichtlich einer hierzu korrespondierenden elektronischen Einrichtung wird die Aufgabe durch Anspruch 5 gelöst und Anspruch 10 gibt ein hiermit zusammenhängendes Computerprogrammprodukt an.

Die Erfindung schließt die verfahrenstechnische Lehre ein, dass durch die vorzugsweise zentrale Steuereinheit bei den unterschiedlichen Feldgeräten derselben Art die physikalisch identischen Parameter per semantischer Analyse der ungleichen Bezeichnungen identifiziert werden, wonach eine jeweils gleiche Kennung an die unterschiedlichen Bezeichnungen geheftet wird.

Mit Hilfe dieser zusätzlichen Kennung werden die ungleichen Bezeichnungen in einfacher Weiser vereinheitlicht, so dass sogar eine automatische Erkennung unterschiedlicher Feldgeräte derselben Art durchführbar ist. Dies schließt den Fehler von Fehlinterpretationen der Parameter aus.

Ist das Feldgerät beispielsweise ein Temperatursensor, so existieren verschiedene Möglichkeiten zu beeinflussen, wie der Temperaturwert geliefert wird. Diese Möglichkeiten sind am Feldgerät durch Parametrierung einstellbar. So kann der Parameter in Grad Celsius (°C, Kelvin (K) oder Grad Fahrenheit (F) geliefert werden. Eine entsprechende Zuordnung der gewünschten Messwerteinheit kann an einer Parametermaske getroffen werden. Die Messwerteinheit ist jedoch herstellerabhängig unterschiedlich bezeichnet und kann beispielsweise "TempUnit" oder "PVUnit" oder "TUnit" oder dergleichen heißen, da die Bezeichnung nicht industriell standardisiert ist.

Da aus der Bedeutung dieser abgekürzten Bezeichnungen nicht eindeutig hervorgeht, dass hiermit die Messwerteinheit gemeint ist, erfordert der Parametrierungsprozess den vorstehend erläuterten Aufwand und ist hinsichtlich Interpretationen fehleranfällig.

Das Anheften der jeweiligen dieser abgekürzten Bezeichnungen gleichen und damit vereinheitlichten Kennung erfolgt dort vorzugsweise durch Ausfüllen eines Eigenschaftsfelds des in der Regel als Softwareobjekt ausgebildeten Parameters. So wird beispielsweise der abgekürzten Bezeichnung "TempUnit" die Kennung "processvalue.unit" als Eigenschaft des Objekts angeheftet. Hierüber lassen sich die Meßwerteinheiten der Temperatursensoren eindeutig und schnell auffinden und der Parameter kann den Erfordernissen des Automatisierungssystem entsprechend zugeordnet werden, beispielsweise auf Grad Celsius (°C) eingestellt werden. Die Suche nach der Kennung kann dabei automatisiert durchgeführt werden.

Neben der Messwerteinheit können beim exemplarischen Beispiel eines Temperatursensors in derselben Weise auch Messbereichsgrenzen, Alarmgrenzen und dergleichen behandelt werden. Die erfindungsgemäße Lösung lässt sich bei der Erstinbetriebnahme eines Feldgeräts zur Einbindung in ein existierendes Automatisierungssystem verwenden. Es ist jedoch auch möglich, diese Lösung während des Betriebs zu wenden, um den Status eines Feldgeräts zu ermitteln, wozu beispielsweise die Kennung "device.status" genutzt werden kann. Somit unterstützt die erfindungsgemäße Lösung wohl die Planung eines Automatisierungssystems sowie Inbetriebnahme, Betrieb und Wartung.

Zur vorzugsweise automatischen Vereinheitlichung der Bezeichnungen gemäß der Erfindung wird vorgeschlagen die elektronisch als Datei vorhandenen Gerätebeschreibungen aller Feldgeräte des Automatisierungssystems in einem zentralen Gerätekatalog zu importieren. Als nächstes werden über die Analyse der verschiedenen Bezeichnungen der Parameter und des Übertragungsprotokolls die jeweiligen Bedeutungen der Bezeichnungen herausgefunden und in Form einer vereinheitlichten Kennung als Eigenschaft des Objekts eingetragen.

Liefert die Analyse der Gerätebeschreibung unvollständige Informationen so wird eine Kommunikationsverbindung mit dem Feldgerät aufgebaut und über Mittel des industriellen Kommunikationsprotokolls die noch fehlenden Daten direkt aus dem Feldgerät ermittelt, so dass die Bedeutung der Parameter ermittelt werden kann.

Im Rahmen der vorliegenden Erfindung kann das Feldgerät neben dem vorstehend exemplarisch angegebenen Temperatursensor auch als Drucksensor, Positionssensor, Durchflusssensor, Spannungs- und Strommesser oder dergleichen anderes in einem Automatisierungssystem übliche Feldgerät ausgebildet sein und deren spezifischen funktionsbestimmten Parametern werden in analoger Weise durch das erfindungsgemäße Verfahren bearbeitet.

Zur Erkennung und Bearbeitung der Bezeichnung der Parameter sollten diese Vorzugsweise zumindest einen Buchstaben und/oder Zahl enthaltene Zeichenkette darstellen. Denn solche Zeichenketten lassen sich in vorteilhafter Weise automatisiert auffinden und bearbeiten. Es ist nicht ausgeschlossen, dass die Bezeichnungen auch bildlich - insbesondere sinnbildlicher Natur - sein können, sofern eine eindeutige Erkennung, Zuordnung und Bearbeitung möglich ist.

Analog hierzu sollte die hinzugefügte Kennung als eine ebenfalls zumindest aus Buchstaben und/oder Zahlen bestehende Zeichenkette ausgebildet sein, zumindest dann, wenn auch die Bezeichnung des Parameters in dieser Form vorliegt. Hierdurch lässt sich ein formatgleiches Anknüpfen der Kennung an die Bezeichnung vornehmen.

Die Erfindung lässt sich insbesondere für Automatisierungszwecke vorteilhafterweise durch ein Computerprogrammprodukt darstellen, wobei die Routine zur Vereinheitlichung der ungleichen Bezeichnungen von physikalisch gleichen Parametern unterschiedlicher Feldgerät derselben Art durch entsprechende in einer Software hinterlegte Steuerungsbefehle umgesetzt werden.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Blockschaltbilddarstellung eines Automatisierungssystems mit Feldgeräten, und
- Figur 2: eine schematische Darstellung der Vereinheitlichung der ungleichen Bezeichnungen im Sinne der Erfindung.

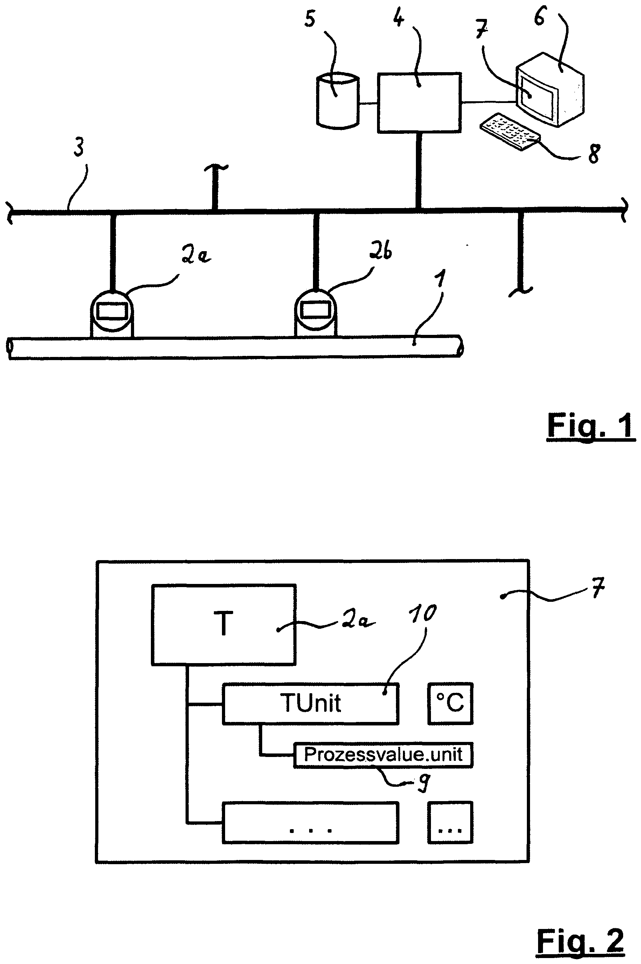

Gemäß Figur 1 umfasst eine Automatisierungssystem einer verfahrenstechnischen Anlage mehrere in einer exemplarischen Rohrleitung 1 angeordnete Feldgeräte 2a und 2b, welche hier beispielhaft Temperaturmessgeräte darstellen, die über eine integrierte Busschnittstelle mit einem Kommunikationsnetzwerk 3 in Verbindung stehen, um insbesondere die ermittelten Temperaturmessdaten über das Kommunikationsnetzwerk 3 nach Maßgabe des Busprotokolls an eine zentrale Steuereinheit 4 weiter zu melden.

Ferner umfassen die Feldgeräte 2a und 2b auch andere Funktionen, wie Selbsttestfunktionen, Lebensdauerzählfunktion und dergleichen, welche ebenfalls über das Kommunikationsnetzwerk 3 überwachbar sind. Die Feldgeräte 2a und 2b lassen sich von der zentralen Steuereinheit 4 aus parametrieren, indem über einen angeschlossenen Monitor 6 per Parametrierungsmaske 7 eine entsprechende Eingabe über eine zugeordnete Tastatur 8 durch den Nutzer vorgenommen werden. Eine der zentralen Steuereinheit 4 zugeordnete Datenbank 5 enthält einen Gerätekatalog mit Datensätzen abgelegter Gerätebeschreibungen jedes angeschlossenen Feldgeräts 2a und 2b und hierzu werden nach Maßgabe des nachstehend erläuterten Verfahrens zu ungleichen Bezeichnungen gleiche Kennungen angeheftet.

Nach Figur 2 wird in einer Parametrierungsmaske das Feldgerät 2a dargestellt, welches ein Temperatursensor ist. Die zum Feldgerät 2a änderbaren Parameter umfassen unter anderem die Meßwerteinheit, welche durch den Hersteller die Bezeichnung "TUnit" erhalten hat und mit der Vorauswahl Grad Celsius (°C) eingestellt ist. Die Interpretation der abgekürzten Bezeichnung "TUnit" erfolgt durch die - nicht weiter dargestellte- Steuereinheit 4 per semantischer Analyse unter Rückgriff auf einen Gerätekatalog. Dieser herstellerspezifischen Bezeichnung "TUnit" wird als nächstes durch Ausfüllen eines Eigenschaftsfeldes 9 zum als Softwareobjekt 10 ausgebildeten Parameter die einheitliche Kennung "processvalue.unit" angeheftet.

### Bezugszeichenliste

- 1: Rohrleitung
- 2: Feldgerät
- 3: Kommunikationsnetzwerk
- 4: Steuereinheit
- 5: Datenbank
- 6: Monitor
- 7: Parametriermaske
- 8: Tastatur
- 9: Eigenschaftsfeld
- 10: Softwareobjekt

## Patentansprüche

1. Verfahren zur Vereinheitlichung von ungleichen Bezeichnungen (TUnit; TempUnit; ...) von physikalisch gleichen Parametern unterschiedlicher Feldgeräte (2a, 2b) derselben Art in einem Automatisierungssystems, die über ein Kommunikationsnetzwerk (3) von mindestens einer zentralen Steuereinheit (4) aus parametriert werden,
**dadurch gekennzeichnet,**
**dass** durch die Steuereinheit (4) bei den unterschiedlichen Feldgeräten (2a, 2b) derselben Art die physikalisch identischen Parameter per semantischer Analyse der ungleichen Bezeichnungen (TUnit; TempUnit; ...) identifiziert werden, wonach eine jeweils gleiche Kennung (prozessvalue.unit) an die ungleichen Bezeichnungen (TUnit; TempUnit; ...) angeheftet wird.

2. Verfahren nach Anspruch 1,
**dadurch gekennzeichnet,**
**dass** das Anheften der jeweils gleiche Kennung (prozessvalue.unit) durch Ausfüllen eines Eigenschaftsfelds (9) des als Softwareobjekts (10) ausgebildeten Parameters durchgeführt wird.

3. Verfahren nach Anspruch 1,
**dadurch gekennzeichnet,**
**dass** die Vereinheitlichung der ungleichen Bezeichnungen (TUnit; TempUnit; ...) im Zuge einer Erstparametrierung bei Inbetriebnahme eines Feldgeräts (2a, 2b) im Automatisierungssystem durchgeführt wird.

4. Verfahren nach Anspruch 1,
**dadurch gekennzeichnet,**
**dass** die Vereinheitlichung der ungleichen Bezeichnungen (TUnit; TempUnit; ...) wärend des Betriebs des Automatisierungssystems im Zuge einer Umprogrammierung von Feldgeräten (2a, 2b) im Automatisierungssystem durchgeführt wird.

5. Einrichtung zur Vereinheitlichung von ungleichen Bezeichnungen (TUnit; TempUnit; ...) von physikalisch gleichen Parametern unterschiedlicher Feldgeräte (2a, 2b) derselben Art in einem Automatisierungssystems, die über ein Kommunikationsnetzwerk (3) von mindestens einer zentralen Steuereinheit (4) aus parametrierbar sind,
**dadurch gekennzeichnet,**
**dass** die Steuereinheit (4) bei den unterschiedlichen Feldgeräten (2a, 2b) derselben Art die physikalisch identischen Parameter per semantischer Analyse der ungleichen Bezeichnungen (TUnit; TempUnit; ...) identifiziert und eine jeweils gleiche Kennung (prozessvalue.unit) an die ungleichen Bezeichnungen (TUnit; TempUnit; ...) anheftet.

6. Einrichtung nach Anspruch 5,
**dadurch gekennzeichnet,**
**dass** das Feldgerät (2a, 2b) derselben Art ausgewählt ist aus einer Gruppe, umfassend: Temperatur-, Druck-, Positionssensor, Durchflussmesser, Spannungs-, Kraft- und Strommesser sowie Analysegeräte und Controller.

7. Einrichtung nach Anspruch 5,
**dadurch gekennzeichnet,**
**dass** der Parameter ausgewählt ist aus einer Gruppe, umfassend: Temperatur, Druck, Positions- oder Wegwert, Spannung, Strom, Durchfluss, Kraft, Menge.

8. Einrichtung nach Anspruch 5,
**dadurch gekennzeichnet,**
**dass** die Bezeichnung (TUnit; TempUnit; ...) des Parameters als eine zumindest Buchstaben und/oder Zahlen enthaltende Zeichenkette ausgebildet ist.

9. Einrichtung nach Anspruch 5,
**dadurch gekennzeichnet,**
**dass** die hinzugefügte Kennung (prozessvalue.unit) als eine zumindest Buchstaben und/oder Zahlen enthaltende Zeichenkette ausgebildet ist.

10. Computerprogrammprodukt für eine Einrichtung nach einem der Ansprüche 5 bis 9 welche nach einem Verfahren nach einem der Ansprüche 1 bis 4 betreibbar ist, wobei die Routine zur Vereinheitlichung von ungleichen Bezeichnungen (TUnit; TempUnit; ...) von physikalisch gleichen Parametern unterschiedlicher Feldgeräte (2a, 2b) derselben Art durch entsprechende in einer Software hinterlegte Steuerungsbefehle umgesetzt ist.

## Claims

1. Method for the unification of differing designations (TUnit; TempUnit; etc.) of physically identical parameters of different field devices (2a, 2b) of the same type in an automation system, which are parameterized via a communication network (3) from at least one central control unit (4),
**characterized in that**
by means of the control unit (4), in the different field devices (2a, 2b) of the same type, the physically identical parameters are identified by semantic analysis of the differing designations (TUnit; TempUnit; etc.), after which an in each case identical identification (processvalue.unit) is attached to the differing designations (TUnit; TempUnit; etc.).

2. Method according to Claim 1,
**characterized in that**
the attaching of the in each case identical identification (processvalue.unit) is carried out by filling out a property field (9) of the parameter designed as a software object (10).

3. Method according to Claim 1,
**characterized in that**
the unification of the differing designations (TUnit; TempUnit; etc.) is carried out during an initial parameterization in the commissioning of a field device (2a, 2b) in the automation system.

4. Method according to Claim 1,
**characterized in that**
the unification of the differing designations (TUnit; TempUnit; etc.) is carried out during the operation of the automation system during a reprogramming of field devices (2a, 2b) in the automation system.

5. Device for the unification of differing designations (TUnit; TempUnit; etc.) of physically identical parameters of different field devices (2a, 2b) of the same type in an automation system, which can be parameterized via a communication network (3) from at least one central control unit (4),
**characterized in that**
the control unit (4) identifies in the different field devices (2a, 2b) of the same type the physically identical parameters by semantic analysis of the differing designations (TUnit; TempUnit; etc.) and attaches an in each case identical identification (processvalue.unit) to the differing designations (TUnit; TempUnit; etc.).

6. Device according to Claim 5,
**characterized in that**
the field device (2a, 2b) of the same type is selected from a group comprising: temperature, pressure and position sensor, flow meter, voltage, force and current meter and analysis devices and controllers.

7. Device according to Claim 5,
**characterized in that**
the parameter is selected from a group comprising: temperature, pressure, position or travel value, voltage, current, flow, force, quantity.

8. Device according to Claim 5,
**characterized in that**
the designation (TUnit; TempUnit; etc.) of the parameter is designed as a character string containing at least letters and/or numbers.

9. Device according to Claim 5,
**characterized in that**
the added identification (processvalue.unit) is designed as a character string containing at least letters and/or numbers.

10. Computer program product for a device according to one of Claims 5 to 9, which can be operated in accordance with a method according to one of Claims 1 to 4, wherein the routine for the unification of differing designations (TUnit; TempUnit; etc.) of physically identical parameters of different field devices (2a, 2b) of the same type is implemented by corresponding control commands stored in a piece of software.

## Revendications

1. Procédé d'uniformisation de différents désignations (TUnit ; TempUnit ; ...) de paramètres physiquement identiques de différents appareils de terrain (2a, 2b) d'un même type dans un système d'automatisation, qui sont paramétrés par au moins une unité de commande centralisée (4) par l'intermédiaire d'un réseau de communication (3),
**caractérisé en ce que**, pour les différents appareils de terrain (2a, 2b) d'un même type, au moyen de l'unité de commande (4), les paramètres physiquement identiques sont identifiés par analyse sémantique des différentes désignations (TUnit ; TempUnit ; ...), puis une même identification respective (prozessvalue.unit) est associée aux différentes désignations (TUnit ; TempUnit ; ...).

2. Procédé selon la revendication 1,
**caractérisé en ce que** l'association d'une même identification respective (prozessvalue.unit) est effectuée en remplissant un champ de propriété (9) du paramètre mis en oeuvre sous la forme d'un objet logiciel (10) .

3. Procédé selon la revendication 1,
**caractérisé en ce que** l'uniformisation des différentes désignations (TUnit ; TempUnit ; ...) est effectuée au cours d'un paramétrage initial lors de la mise en marche d'un appareil de terrain (2a, 2b) dans le système d'automatisation.

4. Procédé selon la revendication 1,
**caractérisé en ce que** l'uniformisation des différentes désignations (TUnit ; TempUnit ; ...) est effectuée pendant le fonctionnement du système d'automatisation au cours d'une reprogrammation d'appareils de terrain (2a, 2b) dans le système d'automatisation.

5. Dispositif d'uniformisation de différentes désignations (TUnit ; TempUnit ; ...) de paramètres physiquement identiques de différents appareils de terrain (2a, 2b) d'un même type dans un système d'automatisation, qui peuvent être paramétrés par au moins une unité de commande centralisée (4) par l'intermédiaire d'un réseau de communication (3), **caractérisé en ce que** l'unité de commande (4), pour les différents appareils de terrain (2a, 2b) d'un même type, identifie les paramètres physiquement identiques par analyse sémantique des différentes désignations (TUnit ; TempUnit ; ...) et associe une même identification respective (prozessvalue.unit) aux différentes désignations (TUnit ; TempUnit ; ...).

6. Dispositif selon la revendication 5,
**caractérisé en ce que** l'appareil de terrain (2a, 2b) d'un même type est sélectionné dans un groupe comprenant : des capteur de température, de pression, de position, des débitmètres, des mesureurs de tension, de force et de courant ainsi que des appareils d'analyse et des régulateurs.

7. Dispositif selon la revendication 5,
**caractérisé en ce que** le paramètre est sélectionné dans un groupe comprenant : une température, une pression, une position ou la valeur d'une course, une tension, un courant, un débit, une force, une quantité.

8. Dispositif selon la revendication 5,
**caractérisé en ce que** la désignation (TUnit ; TempUnit ; ...) du paramètre présente la forme d'une chaîne de caractères contenant au moins des lettres et/ou des nombres.

9. Dispositif selon la revendication 5,
**caractérisé en ce que** l'identification ajoutée (prozessvalue.unit) présente la forme d'une chaîne de caractères contenant au moins des lettres et/ou des nombres.

10. Produit de programme d'ordinateur destiné à un dispositif selon l'une quelconque des revendications 5 à 9 pouvant être mis en fonctionnement conformément à un procédé selon l'une quelconque des revendications 1 à 4, dans lequel la routine d'uniformisation de différentes désignations (TUnit ; TempUnit ; ...) de paramètres physiquement identiques de différents appareils de terrain (2a, 2b) d'un même type est mise en oeuvre par des instructions de commande correspondantes stockées dans un logiciel.
